# EUROPEAN PATENT APPLICATION

(11) **EP 2 169 369 A1**
(43) Date of publication of application: **31.03.2010**
(21) Application number: 08165081.4
(22) Date of filing: 25.09.2008
(51) Int. Cl.: G01J 5/12, G01N 21/35

(54) **Miniature thermopile sensor**

(71) Applicant: General Electric Company, Schenectady, NY 12345 (US)
(72) Inventor: Haveri, Heikki, FI-03150, Huhmari (FI)
(74) Representative: Laako, Tero Jussi

(57) **Abstract**

The invention concerns a thermopile sensor for detecting infrared radiation (R) arriving in an axial entering direction (E). The thermopile sensor (30) comprises a metal housing (10) that has a base section (11) and a mantle section (12), a cavity (39) between said mantle section and said base section, an opening (41) in said mantle section opposite said base section for entering of said infrared radiation, thermopile chip (33) on a top surface (13) of the base section, electrical connectors (36) connected to said thermopile chip(s) and which extending through said metal, and a radiation transparent window (43). Said thermopile sensor (30) is a miniature sensor construction, in which said cavity has an inner dimension adapted for at least one thermopile chip (33). Said base section has an outer base dimension (D2) and a base thickness (H) forming the first part (31) of a thermal mass (M), and said mantle section extends with a length (L) from said base section and has a wall thickness (S) around said opening forming a second part (32) of said thermal mass (M), which surrounds said thermopile chip. Electrical connectors are metal film leads (14) on an electrical insulation membrane (15).

## Description

### FIELD OF THE INVENTION

The invention relates a thermopile sensor for detecting infrared radiation arriving in an axial entering direction, said thermopile sensor comprising: a metal housing that has a base section and a mantle section attached to each other along a border area of said base section, a cavity or cavities between said mantle section and said base section, and at least one opening in said mantle section opposite said base section for entering of said infrared radiation; thermopile chip(s) on a top surface of the base section opposite said opening(s) of the mantle section; electrical connectors, whose first ends are electrically connected to said thermopile chip(s), and which extend through said metal housing while having electrical insulation between said connectors and the metal housing; and radiation transparent window(s) in said opening of the mantle section. The invention also relates a gas analyzer comprising: a measuring volume for through flow of a sample gas mixture, at least one gas component of which is to be analyzed for determining its concentration in said mixture, and having first and second transparent ends; a radiation source inside a heat sink for providing a beam of infrared radiation having a wavelength range, said beam directed to pass said measuring volume through said first and second transparent ends thereof; a thermopile sensor having: a metal housing that has a base section and a mantle section, a cavity or cavities between said mantle section and said base section, and at least one opening in said mantle section opposite said base section for entering said infrared radiation; thermopile chip(s) opposite said opening(s) of the mantle section; electrical connectors extending through said metal housing; and radiation transparent window(s) in said opening of the mantle section; a thermal mass formed of a material having high thermal conductance, surrounding said thermopile sensor and extending towards the radiation source; and a thermal barrier surrounding at least said thermal mass and extending towards the heat sink.

### BACKGROUND OF THE INVENTION

Thermal detector manufacturers have been packaging thermal detectors into transistor cans such as TO-5 or similar for tens of years. However, this kind of thermal detectors are still too big components for very small applications such as gas analyzers, which shall be placed close to the patient. Thermal detectors also need additional thermal design around the detector against thermal transients caused by ambient and sensor start up in addition to normal analyzer hardware. This makes the overall analyzer design quite big and heavy and impossible to use in certain applications.

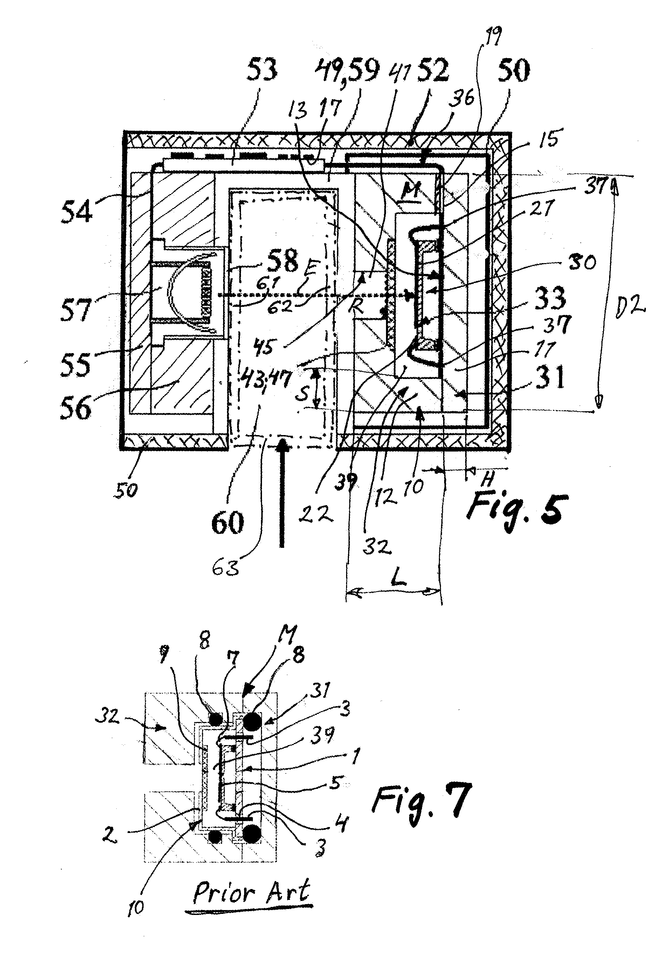

Conventional thermal detectors, such as shown in longitudinal view in Fig. 7, usually consist of a socket 1 and a cap 2 made of a material having high thermal conductance like metal. Socket 1 contains holes for electrical pins 3, which pierce through the electrical insulation 4 inside the holes. Thermopile chip 5 is attached with thermally conductive glue on the socket. Electrical connections of the thermopile chip 5 connect through bonded wires 7 to electrical pins 3. Socket 1 is attached to the cap 2 by gluing, welding, brazing, soldering or similar way and the construction functions as a housing covering and mechanically protecting the thermopile chip attached on the socket. The cap also contains an opening opposite the thermopile chip covered with a window 9 or the like to protect the chip, but also allowing the infrared radiation to traverse through the window to the thermopile chip. The window can alternatively be an optical filter to allow transmittance of a desired wavelength range into to the thermopile chip.

Thermal detectors are very sensitive to those thermal transients caused by other reasons than the infrared radiation itself. To protect the construction against thermal transients it is important for the thermal design that the detector is completely enclosed inside and tightly fitted to an analyzer body made of thermally conductivity materials. A suitable construction for an analyzer in thermal sense has been described in publications US 6,694,800 and EP 1 605 252. In these constructions thermal detector is mounted within the thermally conductive analyzer body surrounded at least by thermal insulation and possibly also by a thermally conductive housing. The constructions stabilize the thermal functioning of the analyzer during different thermal transients as compared to other conventional techniques.

However drawbacks of the above constructions are the analyzer size and the thermal connection between the thermal detector and thermal masses of the analyzer body. This is due to tight mechanical manufacturing tolerances especially in the height and the diameter of the cap and the socket of the thermal detectors described above. This causes difficulties in mounting the thermal detector in to the analyzer body mechanically, but the thermally reliable connection between the detector and the body is difficult to achieve as well. Publication EP 1 605 252 describes one way to mount the thermal detector within the thermal mass M of the analyzer body using elastic O-rings 8 or the like, as shown in the prior art Fig. 7, which O-rings receive and eliminate the effect of the mechanical tolerance in diameter of the cap and the socket. The fitting achieved with O-rings is firm, but space consuming. O-rings and the additional space needed for mechanical tolerances of the detector also function as a thermal insulator or barrier between the detector and the analyzer body in areas, where such insulation should not be present. Thus thermal connection from the thermopile chip to the analyzer body usually goes through the edges of the socket only. Thermal mass and O-ring construction may provide a proper thermal connection, but thermal mass also stabilizes the thermal flow through the electrical pins in to the thermopile inside the detector. The space between the thermal mass and the socket in order to avoid electrical short circuits between the detector pins connecting to the printed circuit board increases the overall size of the analyzer as well, and cause surplus thermal flows often causing further errors in the measuring results.

If the size of the analyzer described above is somehow decreased, the thermal mass decreases and consequently the thermal changes in the analyzer body quicken, too. The dynamic thermal gradient over the thermal detector worsens due to the imperfect thermal connection roiling the operation of the analyzer. The detector also senses all the thermal changes with a delay making the compensation based on temperature measurement more difficult

### SUMMARY OF THE INVENTION

The improved thermal design and construction according to the invention contributes packaging the thermopile chip in to the sensor for achieving better thermal properties as well as better performance and control over the thermal properties of the thermopile chip. Additionally it is possible to decrease the sensor size considerably. For these purposes the thermopile sensor has features as defined in claim 1, and the gas analyzer has features as defined in claim 13.

### BRIEF DESCRIPTION OF THE DRAWINGS

Fig. 1 schematically illustrates a preferred first embodiment of a thermopile sensor for detecting infrared radiation according to the invention in the longitudinal section of the sensor, said section I-I of Fig. 2 being parallel with the radiation beam. A variant with the off-centered opening is marked by double-dotted-lines.
Fig. 2 schematically illustrates the thermopile sensor of Figure 1 in the cross-section section II-II of Fig. 1 perpendicular to the radiation beam.
Fig. 3 show an alternative attachment between the base section and the mantle section of the sensor housing as compared to the attachment shown in Figs. 1 and 2, in the same view as in Fig. 1 respective the area III of Fig. 1.
Fig. 4 schematically illustrates a preferred second embodiment of a thermopile sensor for detecting infrared radiation according to the invention in the longitudinal section of the sensor parallel with the radiation beam, in the same view as in Fig. 1.
Fig. 5 schematically illustrates one preferred embodiment of a gas analyzer according to the invention for determining the concentration of a gas component in a gas mixture, which analyzer comprises a thermopile sensor of Figure 1 in the longitudinal section of the analyzer parallel with the radiation beam, i.e. along the optical axis, in the same view as in Fig. 1.
Fig. 6 schematically illustrates another embodiment of a gas analyzer according to the invention for determining the concentration of a gas component in a gas mixture, which analyzer comprises a third embodiment of a thermopile sensor according to in the longitudinal section of the analyzer parallel with the radiation beam, i.e. along the optical axis, in the same view as in Fig. 4.
Fig. 7 shows a typical thermopile sensor according to the Prior Art, in the same view as in Fig.1.

### DETAILED DESCRIPTION OF THE PREFERRED EMBODIMENTS

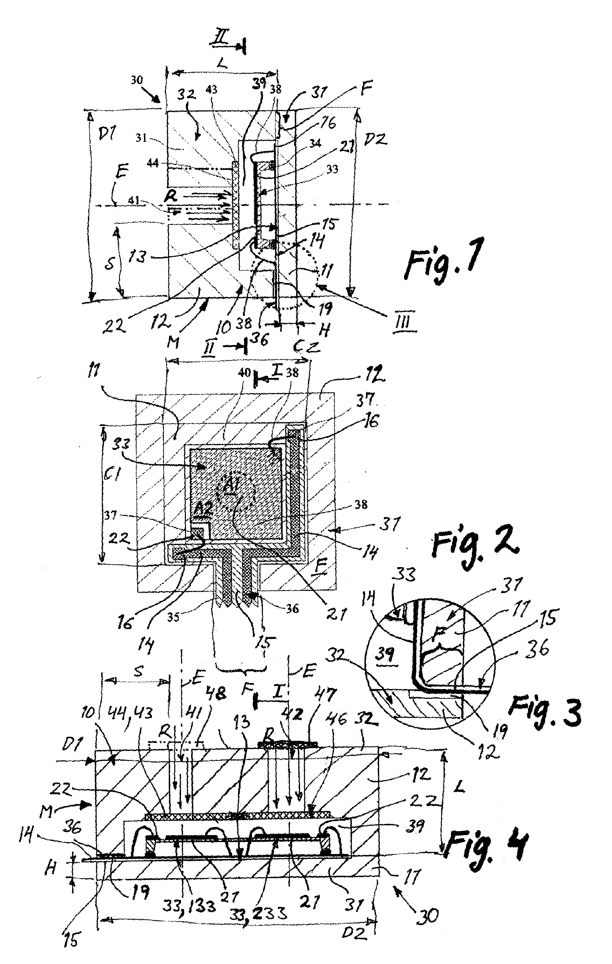

Figures 1 to 6 show a various embodiments of a new sensor construction, which sensor construction is a thermopile sensor for detecting infrared radiation R coming from an infrared radiation source 57 and through a measuring volume 60 and arrives in an axial entering direction E into the thermopile sensor 30. The thermopile sensor 30 comprises a metal housing 10 that has a base section 11 and a mantle section 12 attached to each other along a border area of the base section. Within the housing 10 there is a cavity or cavities 39 between the mantle section 11 and the base section 12, and at least one opening 41 or 42 in the mantle section opposite the base section for entering the infrared radiation R so that the radiation hits the hot junction or hot junctions 21 of one or several thermopile chips. The openings 41, 42 are covered or closed by radiation transparent window(s) 43 and/or 44, which are in or on the openings of the mantle section. The thermopile chip(s) 33; 133, 233 are on a top surface 13 of the base section 11, whereupon the chip(s) are opposite the opening(s) 41 and/or 42 of the mantle section. Accordingly radiation R comes in axial entering direction E through hole(s) 41 and/or 42 and through radiation transparent window(s) 43, 44 onto the thermopile chip(s) 33; 133, 233. The thermopile sensor 30 also comprises electrical connectors 36, whose first ends 16 are electrically connected to the thermopile chip(s), and which extend through the metal housing 10 while having electrical insulation 15, 19 between the connectors and the metal housing 10.

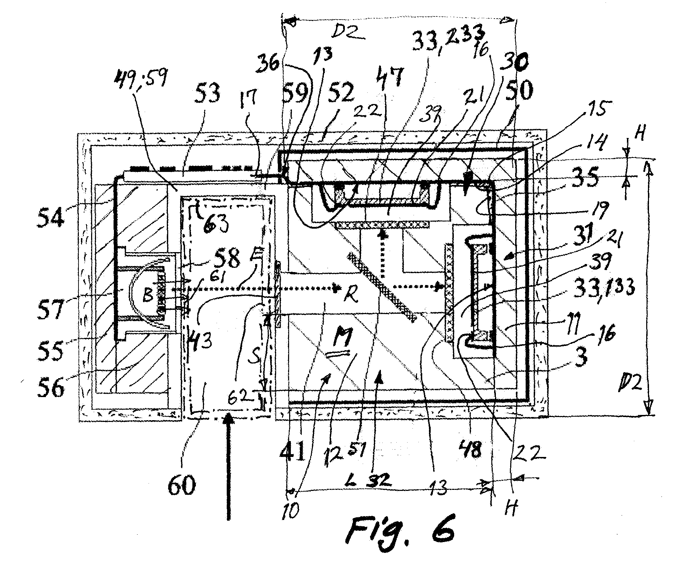

Especially the new sensor 30 is a miniature sensor construction, in which the cavity/cavities 39 mentioned above has/have inner dimensions C1, C2 that are adapted for at least one thermopile chip 33; 133, 233 each with a hot junction 21 and a cold junction 22. It shall be understood that here the said hot junction 21 can be a plurality of directly interconnected hot junctions, when these directly interconnected hot junctions receive substantially the same radiation and are close to each other, and respectively the said cold junction 22 can be a plurality of directly interconnected cold junctions, when these directly interconnected are close to each other. The directly interconnected junctions can be used to improve signal to noise relationship, as often applied in commercial sensors now available. The connections to improve the signal to noise relationship shall not be confused with two or more hot junctions 21, which are positioned to receive different radiation R, for instance one junction through one optical filter and another junction through another optical filter, or alternatively one junction through one optical filter and another junction without any optical filter. The base section 11 has outer base dimensions D2 transversal to the axial entering direction E and base thickness(es) H, whereupon the base section 11 forms the first part 31 of a thermal mass M surrounding the at least one thermopile chip 33; 133, 233. The outer base dimensions D2 can be a side length, if the base section is a quadrangle or a square, or a diameter or mean diameter, if the base section is a cylinder. In the embodiments of figures 1 to 5 the base section 11 has one or two outer base dimensions D2 and one base thickness H, because there is only a single planar piece of the base section. In the embodiment of figure 6 the base section 11 has two or four outer base dimensions D2 and two base thicknesses H, because in fact there is two planar "base sections", though the base section is only one piece having a configuration of the capital letter L with two similar or different branches. In this kind of case the base section 11 is considered to be the sum of the both branches. The mantle section 12 extends with a length L from said base section 11, or from one branch of the base section 11, which length L is opposite to said entering direction E of the infrared radiation R, i.e. length L is parallel with direction E, but in opposite direction than the radiating direction of the beam B. The mantle section 12 has a wall thickness S around said opening(s) 41 and/or 42, forming a second part 32 of the mentioned thermal mass M surrounding said at least one thermopile chip 33; 133, 233. In the first part 31 of said thermal mass M the outer base dimension D2 and the base thickness H together form a first thermal resistance at maximum 0.005 K/W. This thermal resistance *RTH* is calculated in the entering direction E of the radiation R using formula *RTH* = *l* / λ·*A*, where *l* is the length of the piece in the entering direction E, λ is the material constant "thermal conductivity" of the piece and A is the area of the piece transversal to the entering direction E. For the base section 11, i.e. for the first part 31, the calculation is based on base dimension D2 and on the base thickness H. Preferably the first thermal resistance is lower than 1.10⁻³ K/W. The first thermal resistance can be minimized as far as the dimensions of the base section 11 otherwise determined allow. The larger the outer base dimension D2 and the base thickness H is the smaller is the first thermal resistance. Respectively, in the second part 32 of the thermal mass M the length L and the wall thickness S together form a second thermal resistance at maximum 0.2 K/W. Here too, this thermal resistance *RTH* is calculated as above. For the mantle section 12, i.e. for the second part 32, the calculation is based on mantle length L and on the wall thickness S. Preferably the second thermal resistance is lower than 0.05 K/W. The second thermal resistance can be minimized as far as the dimensions of the mantle section 12 otherwise determined allow. The larger the outer length L and the wall thickness S is the smaller is the first thermal resistance. Both for the base section and for the mantle section the material property called thermal conductivity λ shall be as high as possible, just like metals have. Typically the mantle section 12 and the base section 11 are made of a metal, like aluminum or copper. The mantle section 12 has an outer mantle dimension D1 such that the mean value of the outer mantle dimension D1 deviates preferably not more than ± 15% from the mean value of the outer base dimension D2 of the base section 11. If the outer mantle dimension D1 and the outer base dimension D2 deviates too much from each other they have poor thermal connection. Of course a poorer thermal connection between the mantle section 12 and the base section 11 can be compensated with lower thermal resistances, but then the extremely small dimensions which otherwise could be attained are at least partly lost. The first part 31 of the thermal mass M, i.e. base section 11, is attached to the second part 32 of the thermal mass M, i.e. mantle section 12, by thermally conductive glue or some other similar technique.

In the new sensor 30 being a miniature sensor construction, the electrical connectors 36, which electrically connect the hot junction(s) and cold junction(s) to electronics board outside the sensor 30 itself, are metal film leads 14 that are produced on an electrical insulation membrane 15. The electrical connectors 36 are, accordingly, a flexible circuit board, in which an electrical insulation membrane 15 forms the substrate on top of which metal film leads 14 i.e. electrical wiring is formed e.g. by printing, by sputtering, by evaporation or any other proper method. The first ends 16 metal film leads 14 are bonded to the hot junction(s) 21 and the cold junction(s) 22 of the thermopile chip(s) 33; 133, 233. The opposite second ends 17 of the metal film leads 14 are connected to joints on an electronics board 53, which typically is a part of the gas analyzer, explained later, but not part of the miniature thermopile sensor 30. The electrical connectors 36 described above are of course part of the sensor 30.

In the new sensor 30 the thermopile chip(s) 33; 133, 233 and the electrical connectors 36 are fixed on the top surface 13 of the base section 11 so that the electrical connectors 36 extend peripherally at least partly around the thermopile chip 33; 133, 233, whereupon the electrical connectors 36 are arranged in such a position that the electrical insulation membrane 15 is against the mentioned top surface 13. There are metal jump filaments 38, that typically have smaller cross-sectional area than the metal film leads 14, bonding the hot junction(s) 21 and the cold junction(s) 22 outwards to the respective metal film leads 14. Each metal film lead forming an electrical connector has a third thermal resistance at minimum 500 K/W in longitudinal direction thereof. In this case too, the thermal resistance *RTH* is calculated over the length of the leads, not marked by reference number in the figures, using the same formula *RTH* = *l* / λ·*A* as above, where *l* is the length of the lead, λ is the material constant "thermal conductivity" of the lead and A is the cross-sectional area of the lead. Typically the metal leads 14 are made of copper. The electrical connectors 36 with metal film leads 14 on the electrical insulation membrane 15 extend through the metal housing 10 in an attachment area F, where the base section 11 and the mantle section 12 are attached to each other. Preferably the third thermal resistance is higher than 2·10³ K/W.

The third thermal resistance can be maximized as far as the dimensions of the electrical connectors otherwise determined allow. The shorter the leads 14 and the smaller the cross-sectional area of the leads the larger is the third thermal resistance. The electrical connectors 36 are within the attachment area F of the base section 11 and the mantle section 12 either parallel with the entering direction E, as shown in figure 3, or in a direction perpendicular to the entering direction E, as shown in figures 1 and 4 to 5, or both in the parallel and perpendicular direction, as shown in figure 6. Design and assembly of the sensor 30 determines, in which direction the leads run through the housing 10.

Each the hot junction 21 must be and is within an illuminated area A1 visible at the entering direction E of the infrared radiation R through the opening(s) 41, 42 of the mantle section. Respectively, each the cold junction 22 must be and is within a shaded area A2 not visible at the entering direction E of the infrared radiation R through the opening(s) of the mantle section. In case the illuminated area A1 is centered in the direction perpendicular to the axial entering direction E inside the housing, whereupon the opening 41 or 42 of the mantle section 12 is centered in respect to the base section 11, the hot junction 21 of the thermopile chip 33 is centered in the base section 11, too. The cold junction 22 of the thermopile chip 33 is instead positioned towards borders of the base section 11. In case the illuminated area A1 inside the housing is not centered in the direction perpendicular to the axial entering direction E, whereupon the opening 41 and/or 42 of the mantle section 12 is off-centered in respect to the base section 11, the hot junction 21 and the cold junction 22 of the thermopile chip 33 can be symmetrically on the base section 11. The described opening(s) 41 and/or 42 of the mantle section 12 is/are preferably cylindrical and can have polished inner wall(s) 45 to form optical wave tube(s).

The thermopile sensor 30 can comprise a single thermopile chip 33, as shown in figures 1 and 2 and 5, or two thermopile chips 133 and 233, as shown in figures 4 and 6. One of the thermopile chips can be used e.g. for detecting actual signal for determining a concentration of a gas component, and the other thermopile chip can be used as a reference detector. It shall be understood that several thermopile chips can be also used for purposes different from those mentioned above. In cases the thermopile sensor 30 has two or more thermopile chips 33; 133, 233 it also comprise another opening 42 or 41 in the mantle section 12 opposite the base section 11 for entering of the infrared radiation, which typically is different from that radiation entering through the earlier mentioned one opening 41 or 42. The opening or openings of the mantle section is/are closed by radiation transparent window(s) 44 or 43. The window(s) is/are optical windows or similar attached e.g. by gluing or otherwise sealed to the mantle section 12. The window(s) protect(s) the thermopile chip(s) at least mechanically. The window(s) also enable(s) the cavity 39 to be filled with various gases such as Argon, Krypton etc. to improve the sensor functioning. Each opening can have its own window, as shown in figure 6, or several opening can have a common window like a continuous window element 46 extending across both of the openings of the mantle section, as shown in figure 4. The thermopile chip(s) 33; 133, 233 is/are attached using conductive glue 34 or similar technique straight on the top surface 13 of base section 11 functioning as a first part 31 of the thermal mass M.

In the thermopile sensor 30 at least one of the radiation transparent windows 43 and/or 44 can be a first optical filter 47 having a pass-band over a predetermined wavelength range, as shown in figure 5. Alternatively, the thermopile sensor can further comprise a first optical filter 47, or a first and a second optical filter 47, 48 having different pass-bands over predetermined wavelength ranges, as shown in figure 6. The optical filters can be positioned in front of one of the openings 41 and/or 42, as shown in figure 4, or behind one of the openings 41 and/or 42, as shown in figures 5 and 6. Of course it is possible to leave one of openings 41 or 42 without any optical filter, as shown in the left hand side of figure 4. Each optical filter, whether separate from the windows or being window(s), is anyway in connection with one of the openings, so that the radiation goes through filter/window, because hot junction(s) 21 receive radiation through openings. The one opening 41 can have e.g. a semi-transparent mirror 51, which as a beam splitter deviates the in incoming beam of radiation R into two branches of the opening, as shown in figure 6. Then the different branches can have optical filters 47, 48 as described above.

Figures 5 and 6 show various embodiments of a new gas analyzer utilizing the sensor construction described above. In addition to the mentioned miniature sensor 30, the gas analyzer comprises a measuring volume 60 for through flow of a sample gas mixture, at least one gas component of which is to be analyzed for determining its concentration in the mixture, and a radiation source 57 inside a heat sink 56 for providing a beam B of infrared radiation R having a wavelength range and directed towards the thermopile sensor 30 through the measuring volume. The measuring volume 60 has a first and a second transparent ends 61, 62, whereupon the beam of radiation R is allowed to pass the measuring volume through the first and second transparent ends thereof. There is also a thermal barrier 52 surrounding at least the thermal mass M and extending towards the heat sink 56. As simplified, the heat sink 56 can be said to serve for dissipation of heat created by the infrared radiation source 57, the thermal mass M can be said to serve for minimizing the effects of internal thermal transients, and the thermal barrier 52 can be said to serve for minimizing effects of ambient thermal transients. There is in the gas analyzer either a thermally insulating bridge 59, or a thermally conductive bridge 49 between the heat sink 56 and the second part 32 of the thermal mass M.

Further, the gas analyzer comprises at least a thermal barrier 52 surrounding at least the thermal mass M with its first part 31 and second part 32. Here terminology "thermal barrier" means at least thermal insulation, which normally means a porous or fibrous material. The material of thermal insulation itself may be a polymer, like synthetic polymer, or any other material with as low thermal conductivity λ. as possible, and finely divided. The space between fibers or inside pores is filled with some gaseous medium. This thermal system of the gas analyzer can additionally comprise a shield 50 formed of a material or materials having high thermal conductance like some metal or metal alloy and positioned to cover the above mentioned thermal barrier 52, whereupon the shield 50 is at least in thermal contact with the heat sink 56.

The gas analyzer can be a main stream analyzer or a side stream analyzer. In both cases the measuring volume 60 can be a replaceable or disposable module 63. The above mentioned thermally insulating bridge 59 or the thermally conductive bridge 49 then has a form of a slot, which is adapted to receive the replaceable/disposable module 63. Of course, the measuring volume 60 can also be permanent component.

As an example, the gas analyzer comprises such a thermopile sensor 30, which has two thermopile chips 33; 133, 233 with hot junctions 21 within areas illuminated by the radiation R coming through the opening(s) 41 and/or 42. There is a first optical filter 47 or a first and a second optical filters 47, 48 having pass-band(s) over predetermined wavelength range(s) and positioned in the area of the openings 41 and/or 42, so that one of the hot junctions receives radiation through one of the optical filters 47 and another of the hot junctions receives radiation through another of the optical filters 48 or through one of the radiation transparent windows 43 or 44 without optical filtering effect. The first optical filter 47 has a pass-band over a predetermined wavelength range, or the first and the second optical filter 47, 48 has different pass-bands over predetermined wavelength ranges.

With the improved construction described above the thermal connection between the thermopile chip(s) and the first part and the second part Of the thermal mass is excellent. This improves the thermal conductivity and the thermal balance between the different sensor parts thus decreasing static and dynamic thermal gradients over the thermopile chip(s), which in turn improves the tolerance to different thermal changes considerably. The size of the construction decreases significantly as well, since all the conventional parts, such as thermopile detector housing and socket, as well as additional hardware, such as O-rings or similar can be left out.

## Claims

1. A thermopile sensor for detecting infrared radiation (R) arriving in an axial entering direction (E), said thermopile sensor (30) comprising:
- a metal housing (10) that has a base section (11) and a mantle section (12) attached to each other along a border area of said base section, a cavity or cavities (39) between said mantle section and said base section, and at least one opening (41 or 42) in said mantle section opposite said base section for entering of said infrared radiation;
- thermopile chip(s) (33; 133, 233) on a top surface (13) of the base section opposite said opening(s) of the mantle section;
- electrical connectors (36), whose first ends (16) are electrically connected to said thermopile chip(s), and which extend through said metal housing (10) while having electrical insulation (15, 19) between said connectors and the metal housing; and
- radiation transparent window(s) (43 or 44) in said opening of the mantle section,
**characterized in that** said thermopile sensor (30) is a miniature sensor construction, in which said cavity/cavities (39) has/have inner dimensions (C1, C2) adapted for at least one thermopile chip (33; 133, 233) each with a hot junction (21) and a cold junction (22), whereupon:
- said base section (11) has an outer base dimension(s) (D2) and base thickness(es) (H) forming a first part (31) of a thermal mass (M) surrounding said at least one thermopile chip (33; 133, 233);
- said mantle section (12) extends with a length (L) from said base section (11), which length is opposite to said entering direction (E) of the infrared radiation (R), and has a wall thickness (S) around said opening(s) (41 and/or 42), forming a second part (32) of said thermal mass (M) surrounding said at least one thermopile chip (33); and
- electrical connectors (36) are metal film leads (14) on an electrical insulation membrane (15).

2. A thermopile sensor according to claim 1, **characterized in that** in said first part (31) of the thermal mass (M) said outer base dimension (D2) and said base thickness (H) form in said entering direction (E) a first thermal resistance at maximum 0.005 K/W, or lower than 1·10⁻³ K/W; and in said second part of the thermal mass (M) said length (L) and said wall thickness (S) form in said entering direction (E) a second thermal resistance at maximum 0.2 K/W, or lower than 0.05 K/W.

3. A thermopile sensor according to claim 1, **characterized in that** each of said metal film leads forming the electrical connectors have a third thermal resistance at minimum 500 K/W, or higher than 2·10³ K/W in longitudinal direction thereof.

4. A thermopile sensor according to claim 2, **characterized in that** said mantle section (12) has an outer mantle dimension (D1) the mean value of which deviates not more than ± 15% from the mean value of said outer base dimension (D2) of the base section (11).

5. A thermopile sensor according to claim 1, **characterized in that** said thermopile chip(s) (33; 133, 233) and said electrical connectors (36) are fixed on said top surface (13) of the base section (11); that said electrical connectors (36) extend peripherally at least partly around said thermopile chip (33; 133, 233) so that the electrical insulation membrane (15) is against said top surface; and that metal jump filaments (38) with smaller cross-sectional area than said metal film leads bond the hot junction(s) (21) and the cold junction(s) (22) outwards to the respective metal film leads (14).

6. A thermopile sensor according to claim 1 or 5, **characterized in that** said electrical connectors (36) with metal film leads (14) on said electrical insulation membrane (15) extend through the metal housing (10) in an attachment area (F), where the base section (11) and the mantle section (12) are attached to each other; and that within said attachment area (F) said electrical connectors (36) are either parallel with said entering direction (E) or in a direction perpendicular to said entering direction (E), or both in said parallel and perpendicular direction.

7. A thermopile sensor according to claim 1, **characterized in that** each said hot junction (21) is within an illuminated area (A1) visible at said entering direction (E) of the infrared radiation (R) through said opening(s) (41, 42) of the mantle section, and each said cold junction (22) is within a shaded area (A2) not visible at said entering direction (E) of the infrared radiation (R) through said opening(s) of the mantle section.

8. A thermopile sensor according to claim 7, **characterized in that:**
- said hot junction (21) of the thermopile chip (33) is centered in said base section (11), while said cold junction (22) of the thermopile chip (33) is towards borders of said base section (11), and said opening (41 or 42) of the mantle section (12) is centered in respect to said base section (11); or
- said hot junction (21) and said cold junction (22) of the thermopile chip (33) are symmetrically on said base section (11), and said opening (41 and/or 42) of the mantle section (12) is off-centered in respect to said base section (11).

9. A thermopile sensor according to claim 1, **characterized in that** said thermopile sensor (30) comprises a single thermopile chip (33), or said thermopile sensor (30) comprises two thermopile chips (133 and 233).

10. A thermopile sensor according to claim 9, **characterized in that** it further comprises another opening (42 or 41) in said mantle section (12) opposite said base section (11) for entering of said infrared radiation, and a radiation transparent window (44 or 43) in said other opening of the mantle section.

11. A thermopile sensor according to any of claims 1 to 10, **characterized in that:**
- at least one of said radiation transparent windows (43 and/or 44) is a first optical filter (47) having a pass-band over a predetermined wavelength range; or
- said thermopile sensor further comprises a first optical filter (47), or a first and a second optical filter (47, 48) having different pass-bands over predetermined wavelength ranges and positioned in front of one of said openings (41 and/or 42), or behind one of said openings (41 and/or 42).

12. A thermopile sensor according to any of the preceding claims, **characterized in that** said opening(s) (41 and/or 42) of the mantle section (12) is/are cylindrical and has polished inner wall(s) (45); and that said transparent window(s) (43 and/or 44) being sealed to said mantle section (12).

13. A gas analyzer comprising:
- a measuring volume (60) for through flow of a sample gas mixture, at least one gas component of which is to be analyzed for determining its concentration in said mixture, and having first and second transparent ends (61, 62);
- a radiation source (57) inside a heat sink (56) for providing a beam (B) of infrared radiation (R) having a wavelength range, said beam directed to pass said measuring volume through said first and second transparent ends thereof;
- a thermopile sensor (30) having: a metal housing (10) that has a base section (11) and a mantle section (12), a cavity or cavities (39) between said mantle section and said base section, and at least one opening (41 or 42) in said mantle section opposite said base section for entering said infrared radiation (R); thermopile chip(s) (33; 133, 233) opposite said opening(s) of the mantle section; electrical connectors (36) extending through said metal housing (10); and radiation transparent window(s) (43 or 44) in said opening of the mantle section;
- a thermal mass (M) formed of a material having high thermal conductance, surrounding said thermopile sensor and extending towards the radiation source; and
- a thermal barrier (52) surrounding at least said thermal mass and extending towards the heat sink,
**characterized in that** said thermopile sensor (30) is a miniature sensor construction, in which said cavity/cavities (39) has/have dimensions (C1, C2) adapted for at least one thermopile chip (33; 133, 233) each with a hot junction (21) and a cold junction (22), and in which:
- said base section (11) has an outer base dimension (D2) and a base thickness (H) forming a first part (31) of said thermal mass (M), said mantle section (12) extends with a length (L) from said base section (11), which length is opposite to an entering direction (E) of said infrared radiation (R), and has a wall thickness (S) around said opening(s) (41 and/or 42), forming a second part (32) of said thermal mass (M), whereupon said first part (31) and said second part (32) of the thermal mass (M) are fixed with each other forming the sole housing (10) of the thermopile sensor (30); and
- electrical connectors (36) are metal film leads (14) on an electrical insulation membrane (15) their first ends (16) bonded to said hot junction(s) (21) and said cold junction(s) (22), and the second ends (17) thereof connected to joints on an electronics board (53).

14. A gas analyzer according to claim 13, **characterized in that** between said heat sink (56) and said the second part (32) of the thermal mass (M) there is:
- a thermally insulating bridge (59); or
- a thermally conductive bridge (49).

15. A gas analyzer according to claim 14, **characterized in that** it further comprises:
- a thermal barrier (52) surrounding at least said thermal mass (M) with the first part (31) and the second part (32); and
- a shield (50) formed of a material or materials having high thermal conductance; said shield (50) being at least in thermal contact with said heat sink (56) and covering said thermal barrier (52).

16. A gas analyzer according to claim 13, **characterized in that** measuring volume (60) is a replaceable/disposable module (63), and said thermally insulating bridge (59), or said thermally conductive bridge (49) respectively has a form of a slot adapted to receive said replaceable/disposable module (63).

17. A gas analyzer according to any of claims 13 to 16, **characterized in that** said thermopile sensor (30) comprises two thermopile chips (33; 133, 233) with hot junctions (21) within areas illuminated by said radiation (R) through said opening(s) (41 and/or 42), and a first optical filter (47) or a first and a second optical filters (47, 48) having pass-band(s) over predetermined wavelength range(s) and positioned in front of said openings (41 and/or 42), so that one of said hot junctions receives radiation through one of said optical filters (47) and another of said hot junctions receives radiation through another of said optical filters (48) or through one said radiation transparent window (43 or 44) without optical filtering effect; and that said radiation transparent window(s) (43, 44) is/are separate from said optical filters (47, 48).

18. A gas analyzer according to any of claims 13 to 16, **characterized in that** said thermopile sensor (30) comprises two openings (41 and 42) in said mantle section (12) opposite said base section (11) for entering said infrared radiation (R), two thermopile chips (133, 233) with hot junctions (21) each of which being within the respective one of the two areas illuminated by said radiation (R) through one opening (41) and another opening (42), and
- a first optical filter (47) having pass-bands over predetermined wavelength range in front of said one opening (41) and a radiation transparent second window (44) without optical filtering effect in front of said another opening (42), or
- a first and a second optical filter (47, 48) having different pass-bands over predetermined wavelength ranges, said first optical filter (47) in front of said one opening (41) and said second optical filters (48) in front of said another opening (42).

19. A gas analyzer according to claim 18, **characterized in that** said first and second optical filters (47 and 48), and said first optical filter (47) and said transparent window (44) are sealed to said mantle section.

20. A gas analyzer according to any of claims 13 to 19, **characterized in that** said radiation transparent windows (43, 44) are one continuous window element (46) extending across both of said openings of the mantle section.
